# EUROPÄISCHE PATENTSCHRIFT

(11) **EP 0 676 840 B1**
(45) Veröffentlichungstag und Bekanntmachung des Hinweises auf die Patenterteilung: **18.08.1999**
(21) Anmeldenummer: 95105471.7
(22) Anmeldetag: 11.04.1995
(51) Int. Cl.: H02G 3/04

(54) **Flexibles Kabelschutzrohr**
Flexible cable protective tubing
Tube flexible pour protection de câble

(30) Priorität: 11.04.1994 CH 108794
(43) Veröffentlichungstag der Anmeldung: 11.10.1995
(73) Patentinhaber: Elkuch-Ganter, Wilma, 9488 Schellenberg (LI)
(72) Erfinder: Elkuch-Ganter, Wilma, 9488 Schellenberg (LI)
(74) Vertreter: Rosenich, Paul, Dipl.-Ing.

(56) Entgegenhaltungen:
- EP-A- 0 197 546
- CH-A- 639 508
- DE-U- 9 017 373
- DE-U- 9 218 100

## Beschreibung

Die Erfindung betrifft ein gebautes, flexibles Kabelschutzrohr bzw. Elemente hierfür. Insbesondere als Schutzhüllen für Kabel im Erdreich oder im Beton kommen aus einzelnen Ringsegmenten zusammengesetzte Rohre zum Einsatz, die aufgrund ihrer Struktur eine stabile Panzerwirkung erzeugen, durch ihren segmentförmigen Zusammenbau jedoch flexibel bzw. in gewissem Rahmen biegsam sind.

Solche Rohre haben sich bewährt, wobei unter anderem zwei unterschiedliche Anwendungsfälle vorkommen: Zum einen sollen die Rohre bzw. deren Segmente die Stütz- bzw. Panzerwirkung aufbringen und zusätzlich untereinander abdichten, zum anderen genügt es, wenn die Rohre bzw. deren Segmente lediglich die Panzerwirkung übernehmen.

Die Rohre für den zweiten Anwendungsfall sind einfach herzustellen. Es bedarf keiner grossen Aufwendungen hinsichtlich der Herstelltoleranzen. Solche Rohre bzw. deren Segmente verfügen über je einen zylindrischen Abschnitt mit einem kleinen und einem grossen Durchmesser. Der Aussendurchmesser des kleinen Abschnittes ist geringfügig geringer als der Innendurchmesser des grösseren Abschnittes; er weist jedoch auch einen Wulst auf, der mit einem gegengleichen Wulst am Innendurchmesser des grösseren Rohres verrastbar ist. Das Spiel der Durchmesser und ein Längsspiel der Rohrsegmente zueinander ermöglichen die Flexibilität. Das Schweizer Patent 639508 beschreibt solche Rohre.

Bekannte Rohre für den zweiten Anwendungsfall sind in der Herstellung etwas aufwendiger. Hier müssen engere Fertigungstoleranzen eingehalten werden. Solche Rohre sind in dem Schweizer Patent 473349 beschrieben. Dabei haben die beiden Seitenstege jedes Rohrsegmentes gegenüber dem Mittelsteg ein geringes Übermass und an den Kanten Dichtungsflächen mit denen sie an den zylindrischen oder prismatischen Ringflächen benachbarter Rohrsegmente anliegen. Derartige Rohre dichten ohne Zuhilfenahme zusätzlicher Dichtungsmittel ab.

Bei beiden erwähnten bekannten Rohrtypen ist das Zusammensetzen der einzelnen Rohrglieder ein Problem, da sie mit relativ grossem Kraftaufwand ineinander gesteckt werden müssen. Dies gilt insbesondere für den Rohrtyp gemäss zweitem Anwendungsfall. Je härter die verwendeten Materialien, je höher die Wülste an den Rändern und je besser die Dichtheit gegenüber eindringendem Wasser, umso schlechter sind die herkömmlichen Elemente ineinander steckbar. Gleichzeitig verschlechtert sich beim Bekannten durch die angegebenen Parameter auch die Biegsamkeit, was in vielen Fällen problematisch ist, da an der Baustelle von den Anwendern oftmals zu grosse Biegekräfte aufgebracht werden, die sogar eine Zerstörung des Schutzrohres zur Folge haben können. Das Ziel ist, bei allen bekannten Schutzrohren, wie auch bei dem gemäss der Erfindung, mit möglichst wenigen Einzelsegmenten einen 90° Rohrbogen zu schaffen.

Zu erwähnen ist hier auch die EP-A2-197'546, die allerdings konvexe und konkave Halbkugelflächen beschreibt, die passgenau ineinandergreifen. Diese sind aufwendig herzustellen und erlauben kein axiales Spiel (in Richtung der Rohrachse) und meist auch kein tangentiales Spiel.

Demgegenüber liegt der Erfindung die Aufgabe zugrunde, ein gebautes Kabelschutzrohr bzw. Elemente dafür zu schaffen, das bzw. die einerseits ausreichende Dichtheit gegen das Eindringen von Wasser aufweisen, andererseits vor allem leicht montierbar sind und über gute Flexibilität in Biegerichtung verfügen.

Gelöst wird diese Aufgabe durch die Merkmale der Ansprüche 1 und 6. Erfindungsgemässe Rohre sind leicht zu montieren, gut biegsam und zumindest über weite Biegeradien wasserdicht. Besondere Ausgestaltungen sind in den abhängigen Ansprüchen beschrieben.

Weitere Varianten und Vorteile ergeben sich aus der Figurenbeschreibung. Es zeigen dabei:
- Fig.1: den Schnitt durch ein zweigliedriges Rohr;

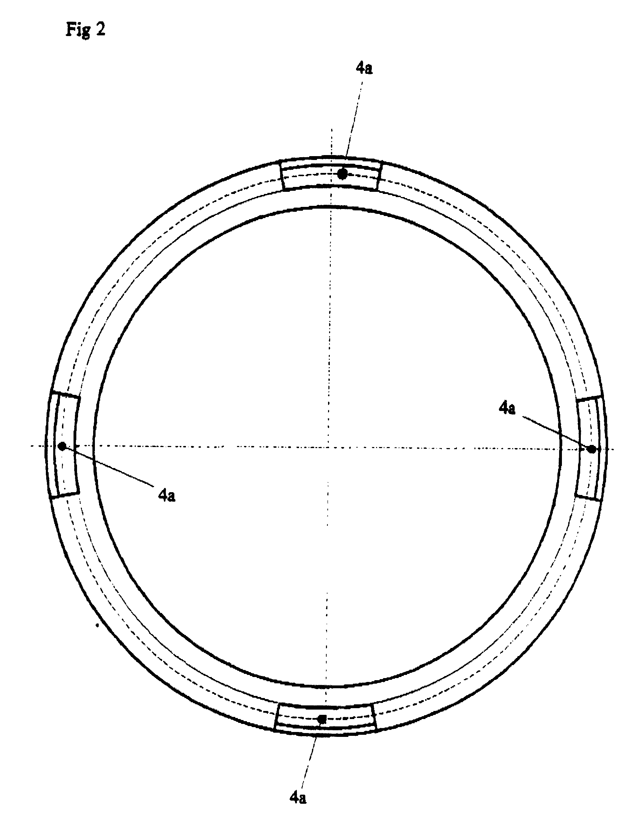

- Fig.2: eine Ansicht des Rohres nach Fig.1 in Achsialrichtung;

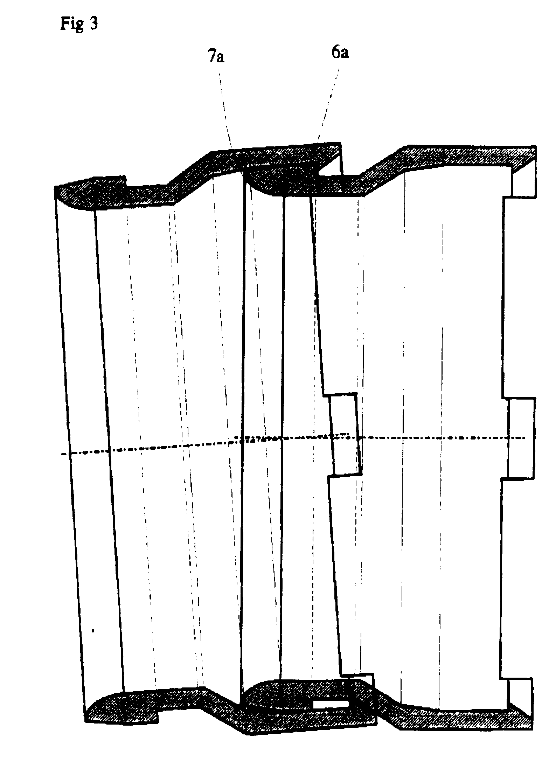

- Fig.3: das Rohr gemäss Fig.1 in abgebogenem Zustand im Schnitt;
- Fig.4: einen vergrösserten Detailschnitt durch eine Segmentvariante mit Ringwulst;
- Fig.5: einen Schnitt durch eine Variante mit zungenförmigen Rastorganen bzw. Haken;
- Fig.6: einen Detailschnitt einer weiteren Variante mit bombierter Dichtfläche;
- Fig.7: einen Detailschnitt einer weiteren Variante mit O-Ring und
- Fig.8: einen Detailschnitt einer Variante mit optimalen Öffnungswinkeln der konischen Abschnitte.

Die Figuren sind zusammenhängend und übergreifend beschrieben. Gleiche Bezugszeichen bedeuten gleiche Teile, gleiche Bezugszeichen mit unterschiedlichen Indizes beziehen sich auf funktionell gleiche jedoch formunterschiedliche Teile. Die Zeichnungen sind nicht zwangsläufig massstabsgerecht.

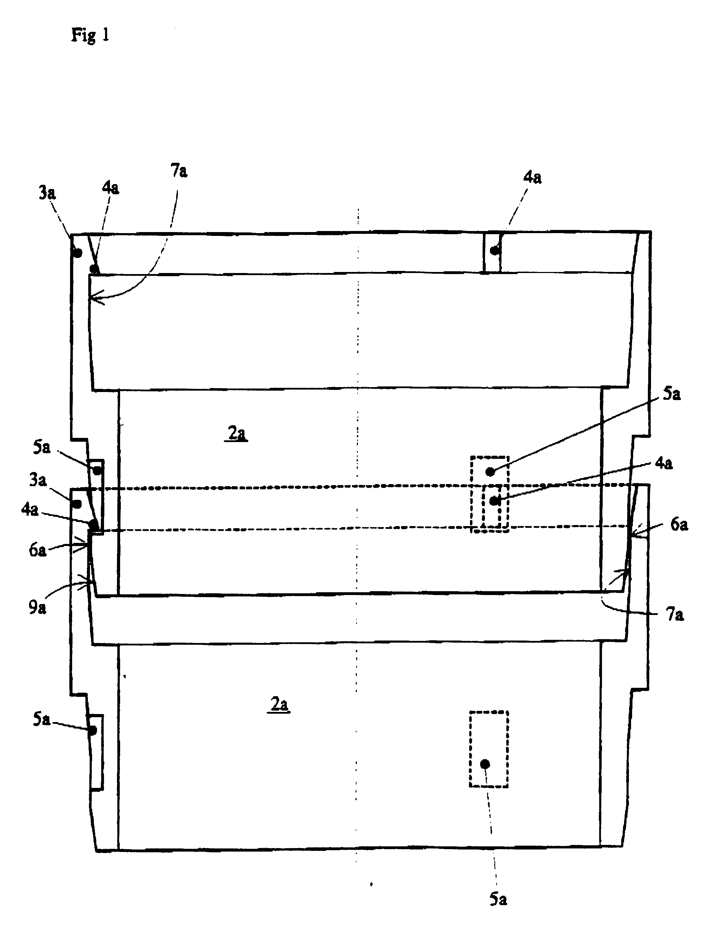

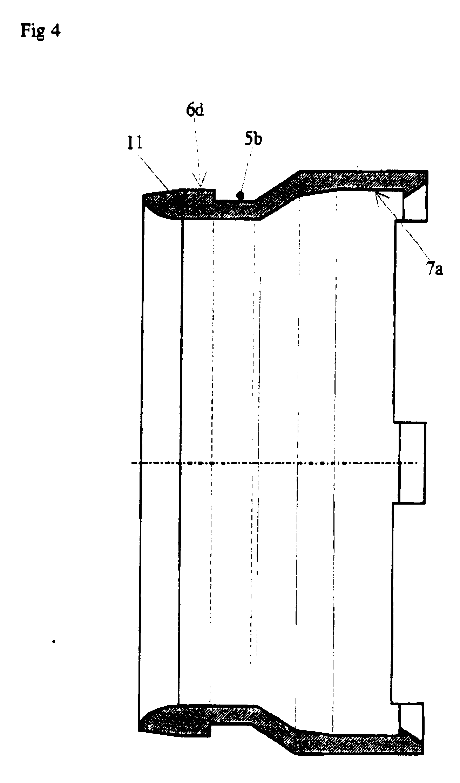

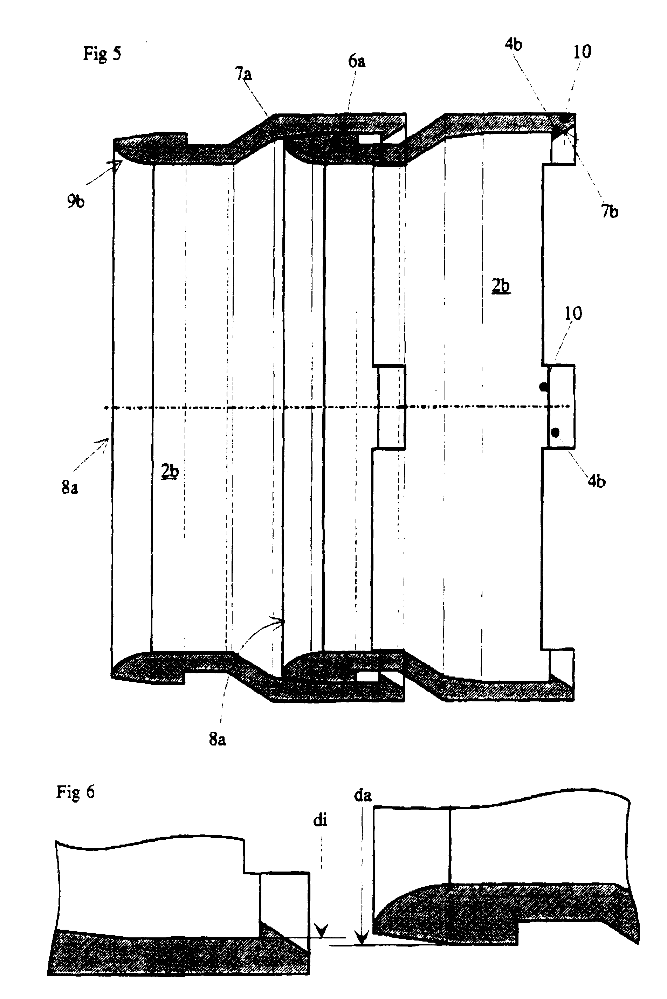

Der Schnitt durch das Rohr la in Fig.1 zeigt den prinzipiellen Aufbau eines erfindungsgemässen Schutzrohres. Es besteht aus einzelnen Segmenten 2, die ineinander steckbar sind und so verrasten, dass sie nicht ohne weiteres wieder getrennt werden können, jedoch zueinander gebogen werden können. Haken 4, die an einem Rohrende angeordnet sind greifen in Ausnehmungen 5 am anderen Rohrende eines benachbarten Rohrsegmentes 2. Bei Fig.1 sind für jeden Haken 4a je eine Ausnehmung 5a vorgesehen, was zwar einen Verdrehschutz für die Segmente 2a untereinander bietet, jedoch bei der Herstellung vom Formenbau her aufwendig ist. Die Alternative zeigt sich in Fig.4, wo anstelle von Einzelausnehmungen eine ringförmige Ausnehmung 5b durch einen Ringwulst 11 gebildet wird, wobei letzterer eine im wesentlichen zylindrische Dichtfläche 6d trägt. Die Dichtfläche 6a gemäss Fig 1 befindet sich an der äusseren Mantelfläche 9a des einen Segmentes 2a gegen die innere Mantel fläche 7a des zweiten Segmentes 2a. Bei dem vorliegenden Fall ist eine Biegung von Segment 2a zu Segment 2a von 4° leicht möglich. Die Dichtflächen wandern dann entsprechend der Neigung entlang den Mantelflächen 7,9. Besonders gut wirken sie dann, wenn die Flächen, wie an sich bekannt, konisch angeschrägt sind und eine Bombierung aufweisen. Je grösser die Bombierung um so besser erfolgt die Dichtung beim gekrümmten Rohr 1. Bei vergrössertem Aussendurchmesser der äusseren Mantelfläche gegenüber dem Innendurchmesser di der inneren Mantelfläche 7c ergibt sich zudem eine Dichtpressung (Fig.6). Die Variante gemäss Fig.5 ist besonders einfach zu montieren, da die Haken 4b an Zungen 10 federn.

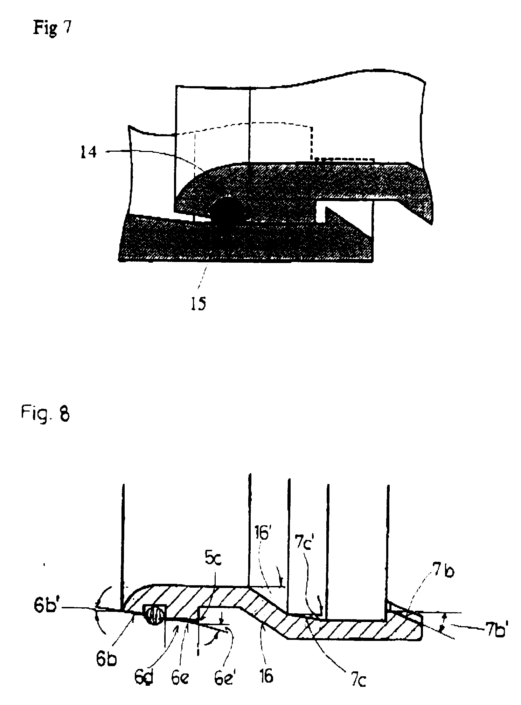

Die Ausbildung gemäss Fig.7 hat als randseitige Begrenzung der Ringnut 5c eine zweite Ringnut 14, in die ein O-Ring 15 eingesetzt ist. Die Haken sind bei dieser Variante etwas weiter nach oben angeschrägt, so dass sie beim Aufschieben auf den O-Ring 15 diesen in seine Nut 14 drücken. Haben dabei die nasenförmigen Haken den O-Ring 15 erst überwunden, verrasten sie in erster Linie nicht wie bei den anderen Varianten an einem Vorsprung des benachbarten Segmentes, sondern am O-Ring 15. Der O-Ring 15 übernimmt somit Rast- und Dichtfunktion.

Dabei ist diese Variante herstellungstechnisch einfach. Beim Spritzgussfertigen der Segmente werden für die beiden Umfangsnuten 5c und 14 in die Spritzgussform Schieber eingesetzt. Will man beim gleichen Segmentaufbau jedoch auf den O-Ring 15 verzichten, weil z.B. die Dichtheit nicht so wichtig ist, oder weil die Segmente billiger sein müssen, so kann man die Schieber einfach durch andere Schieber ersetzen, die lediglich die Ringnut 5c bilden und an der Stelle der zweiten Ringnut 14 einen Wulst 11 (Fig.4) belassen.

Versuche und Computer-Modellierungen haben gezeigt, dass die Wahl der Öffnungswinkel der konischen Abschnitte für die Beugungs- und Dichtungs-Eigenschaften des Schutzrohres von grosser Bedeutung ist. Insbesondere wurde erkannt, dass die im wesentlichen zylindrische Dichtfläche 6d (Pig. 4), insbesondere zumindest in einem Teilbereich 6e der an die Einrastkante 5c der Ringnut 5 anschliesst, vorzugsweise konisch ausgebildet ist. Der bevorzugte Öffnungswinkel 6e' (Winkel zwischen der Rohrachse und der Mantelfläche) beträgt dabei mindestens 5°, vorzugsweise aber etwa 12°. Der Öffnungswinkel 6b' der Dichtfläche 6a im Endbereich 6b des Rohrsegmentes beträgt mindestens 4°, vorzugsweise aber 8°.

In einem konischen Übergangsbereich 16 zwischen den innen, bzw. aussen anliegenden Segmentenden weisen die Innen- und Aussenflächen Öffnungswinkel 16' von mindestens 20°, maximal 45°, vorzugsweise etwa 32° auf. Die innere Mantelfläche 7 weist einen an den Übergangsbereich 16 anschliessenden konischen Teilbereich 7c mit mit einem Öffnungswinkel 7c' von mindestens 5°, vorzugsweise aber etwa 8° auf. Die innere Mantelfläche 7 setzt sich im Bereich der Haken 4 als konische Innenfläche 7b mit einem Öffnungswinkel 7b' von mindestens 15°, maximal 40°, vorzugsweise aber etwa 22° fort.

Die bevorzugten Öffnungswinkel sind für Segmente mit Aussendurchmessern von etwa 72mm und Längen von etwa 36mm optimal. Bei der beschriebenen Formgebung der Segmente ergeben sich Rohre, die auf 1.5m Länge um bis zu 180° gebogen werden können. Auf die in Fig.6 beschriebene Dichtpressung der inneren gegen die äussere Mantelfläche durch Überlappung kann aufgrund der optimalen Formgebung ohne Verlust der notwendigen Dichtheit verzichtet werden. Die Rohre bleiben selbst ohne 0-Ring 15 auch bei Druckunterschieden von mindestens 0.2 bar zwischen dem Rohrinneren und dem Rohräusseren dicht und lassen sich mit geringem Kraftaufwand in die gewünschte Form biegen. Bei der Verwendung von O-Ringen erhöht sich die zulässige Druckdifferenz auf im wesentlichen 4 bar. Aufgrund dieser guten Dicht- und Krümmungseigenschaften erhält das erfingungsgemässe Rohr breite Anwendungsmöglichkeiten im Baubereich und auch im Lebensmittel- und Chemie-Bearbeitungsbereich.

Zum Herstellen der Segmente wird vorzugsweise Polyethylen, insbesondere Hochdruck-Polyethylen, wie etwa das Handelsprodukt Eraclene verwendet.

Die beschriebenen Ausführungsformen, insbesondere jene mit verbesserter Dichtwirkung, lassen sich selbstverständlich über die angegebenen Anwendungsfälle als Schutzrohre auch beliebig im Sanitärbereich z.B. bei Abwasserrohren anwenden, wo man durch sie aufwendige einstückige Rohrkrümmer ersetzen kann. Vor allem bei Durchmessern über 200mm hat man erfindungsgemäss die Möglichkeit noch relativ preisgünstige Krümmer herzustellen, die zudem noch elastisch bleiben und allfällige Dehnungen und Verwindungen von Rohrnetzen auszugleichen vermögen. Die Anwendung der Erfindung im Druckwasserbereich hätte darüber hinaus den Vorteil, geräuschdämmend zu wirken und Schwingungen im Rohrleitungssystem an ihrer Ausbreitung zu behindern.

Anstelle der angegebenen Dichtungsringe könnten auch Lippendichtungen zum Einsatz gelangen, was jedoch aus Kostengründen nicht bevorzugt ist.

### BEZUGSZEICHENLISTE

- 1: Schutzrohr a
- 2: Rohrsegment a,b,d
- 3: Rastorgane a
- 4: Haken a,b,c
- 5: Ausnehmung a
- 5b,c: Ringnut
- 6: Dichtfläche a,b,c,d,e
- 6': Öffnungswinkel der Dichtflächen 6
- 7: innere Mantelfläche a,b,c
- 7': Öffnungswinkel der inneren Mantelflächen 7
- 8: Rand a
- 9: äussere Mantelfläche a,b,c
- 10: Zunge
- 11: Ringwulst
- 13: Dichtungsring
- 14: zweite Ringnut
- 15: O-Ring
- 16: Übergangsbereich
- 16': Öffnungswinkel des Übergangsbereiches

## Patentansprüche

1. Gebautes Schutzrohr (1) aus ineinander verrastbaren Rohrsegmenten (2) mit Rastorganen (3) und einander im verrasteten Zustand berührenden Dichtflächen (69, wobei die Organe (3) wenigstens drei, vorzugsweise um maximal je 120 Grad zueinander versetzte, elastische, nasenförmige Haken (4) aufweisen, für deren Eingriff am jeweils benachbarten Segment (2) wenigstens eine Ausnehmung (5) vorgesehen ist, dadurch gekennzeichnet, dass die Ausnehmung (5) ein axiales und tangentiales Spiel der Haken (4) in bezug auf das Rohr (1) erlaubt.

2. Schutzrohr nach Anspruch 1, dadurch gekennzeichnet, dass die Ausnehmung (5) als Ringnut (5b;c) ausgebildet ist oder/und hinter einem Ringwulst (11;15) plaziert ist, wobei der Ringwulst gegebenenfalls durch einen in einer zweiten Ringnut (14) gehaltenen O-Ring (15) gebildet ist.

3. Schutzrohr nach Anspruch 1, dadurch gekennzeichnet, dass jedem Haken (4) eine eigene Ausnehmung (5a) mit entsprechendem Spiel zugeordnet ist.

4. Schutzrohr nach einem der vorhergehenden Ansprüche, dadurch gekennzeichnet, dass die äusseren bzw. inneren Mantelflächen (9,7) der Segmente (2) für die Vergrösserung des gewährbaren Spiels in Biegerichtung konisch angeschrägt sind, wobei vorzugsweise die Haken (4a) aus den inneren Mantelflächen (7a) nasenförmig abragen.

5. Schutzrohr nach einem der Ansprüche 1 bis 3, dadurch gekennzeichnet, dass die Haken (4) an ihrer Innenseite (7b) nach aussen zu konisch verjüngt sind, und dass vorzugsweise der Rand (8a) der Rohrsegmente (2), an denen die Ausnehmung (5) angeordnet ist, an seiner äusseren Mantelfläche (9b) nach aussen hin konisch verjüngt ist, wobei gegebenenfalls die Haken (4) an separaten federnden Zungen (10) ausgebildet sind.

6. Rohrsegment (2) für gebaute Schutzrohre (1) mit Rastorganen (3) für das Verrasten benachbarter Segmente (2b) und einer inneren Mantelfläche (7) an einem Segmentende und einer äusseren Mantelfläche (9) am anderen Segmentende, welche Mantelflächen (7,9) im verrasteten Zustand zweier benachbarter Segmente (2) einander berührende Dichtflächen (6) ergeben, wobei die Organe (3) an einer Seite der Segmente wenigstens drei, vorzugsweise um maximal je 120 Grad zueinander versetzte, elastische, nasenförmige Haken (4) aufweisen, für deren Eingriff am jeweils benachbarten Segment (2) an der anderen Seite wenigstens eine Ausnehmung (5) vorgesehen ist, dadurch gekennzeichnet, dass die Ausnehmung (5) ein axiales und tangentiales Spiel der Haken (4) eines benachbarten Segmentes (2) in bezug auf das Rohr (1) erlaubt.

7. Segment nach Anspruch 6, dadurch gekennzeichnet, dass die inneren bzw. äusseren Mantelflächen (7,9) konisch abgeschrägt sind, wobei die Dichtflächen am jeweils kleinsten (innere konische Mantelfläche (7)) bzw. grössten (äussere konische Mantelfläche (9)) Durchmesser der konischen Bereiche ausgebildet sind.

8. Segment (2c) nach Anspruch 6 oder 7, dadurch gekennzeichnet, dass die konischen Bereiche im Bereich der Dichtflächen bombiert sind, wobei vorzugsweise der Aussendurchmesser (dₐ) im nichtverrasteten Zustand an der bombierten Stelle grösser ist als der Innendurchmesser (dᵢ) der inneren Mantelfläche (7).

9. Schutzrohr bzw. Rohrsegment nach einem der vorhergehenden Ansprüche, dadurch gekennzeichnet, dass es aus Kunststoff, vorzugsweise Polyethylen, insbesondere Hochdruck-Polyethylen, gegebenenfalls aber Hartpolypropylen, spritzgussgefertigt ist.

10. Schutzrohr (1) bzw. Rohrsegment (2) nach einem der vorhergehenden Ansprüche, dadurch gekennzeichnet, dass im Bereich der Dichtfläche (6) eine weitere Ringnut für die Aufnahme eines Dichtungsringes vorgesehen ist.

11. Schutzrohr (1) bzw. Rohrsegment (2) nach einem der vorhergehenden Ansprüche, dadurch gekennzeichnet, dass für den Dichtungs- bzw. 0-Ring ein Moosgummi o.dgl. zum Einsatz gelangt.

## Claims

1. Assembled protective tubing (1) comprising interlockable tube segments (2) with catch members (3) and sealing surfaces (69) which come into contact with one another in the locked state, the members (3) having at least three elastic, lug-like hooks (4) preferably staggered by not more than 120 degrees relative to one another, for the engagement of which hooks at least one recess (5) is provided in each adjacent segment (2), characterized in that the recess (5) permits an axial and tangential play of the hooks (4) relative to the tubing (1).

2. Protective tubing according to Claim 1, characterized in that the recess (5) is in the form of an annular groove (5b; c) and/or is positioned behind an annular bead (11; 15), the annular bead optionally being formed by a O-ring (15) held in a second annular groove (14).

3. Protective tubing according to Claim 1, characterized in that a separate recess (5a) with corresponding play is coordinated with each hook (4).

4. Protective tubing according to any of the preceding Claims, characterized in that the outer or inner lateral surfaces (9, 7) of the segments (2) are conically bevelled to increase the allowable play in the bending direction, the hooks (4a) preferably projecting in a lug-like manner from the inner lateral surfaces (7a).

5. Protective tubing according to any of Claims 1 to 3, characterized in that the hooks (4) are conically tapered outwards on their inside (7b) and that that edge (8a) of the tube segments (2) in which the recess (5) is arranged is preferably conically tapered outwards on its outer lateral surface (9b), the hooks (4) optionally being formed on separate springy tongues (10).

6. Tube segment (2) for assembled protective tubings (1) having catch members (3) for locking adjacent segments (2b) and an inner lateral surface (7) on one segment end and an outer lateral surface (9) at the other segment end, which lateral surfaces (7, 9) result in sealing surfaces (6) in contact with one another when two adjacent segments (2) are in the locked state, the members (3) on one side of the segments having at least three elastic, lug-like hooks (4) preferably staggered by not more than 120 degrees relative to one another, for the engagement of which hooks at least one recess (5) is provided in each case in the adjacent segment (2) on the other side, characterized in that the recess (5) permits an axial and tangential play of the hook (4) of an adjacent segment (2) relative to the tubing (1).

7. Segment according to Claim 6, characterized in that the inner or outer lateral surfaces (7, 9) are conically bevelled, the sealing surfaces being formed in each case in the smallest (inner conical lateral surface (7)) or largest (outer conical lateral surface (9)) diameter of the conical regions.

8. Segment (2) according to Claim 6 or 7, characterized in that the conical regions are dished in the region of the sealing surfaces, the outer diameter (do) in the dished area in the unlocked state being greater than the inner diameter (dᵢ) of the inner lateral surface (7).

9. Protective tubing or tube segment according to any of the preceding Claims, characterized in that it is produced by injection moulding from plastic, preferably polyethylene, in particular low-density polyethylene, but optionally rigid polypropylene.

10. Protective tubing (1) or tube segment (2) according to any of the preceding Claims, characterized in that a further annular groove for receiving a sealing ring is provided in the region of the sealing surface (6).

11. Protective tubing (1) or tube segment (2) according to any of the preceding Claims, characterized in that microcellular rubber or the like is used for the sealing ring or O-ring.

## Revendications

1. Tube de protection (1) composite, constitué de segments tubulaires (2) encliquetables les uns dans les autres, équipés d'organes d'encliquetage (3) et de faces d'étanchéité (69), entrant en contact les unes les autres à l'état encliqueté, les organes (3) présentant au moins trois crochets (4) en forme d'ergots élastiques, de préférence décalés d'un angle maximal respectif de 120 degrés les uns par rapport aux autres, crochets pour l'engagement desquels, sur chaque segment (2) voisin, est prévu au moins un évidement (5), caractérisé en ce que l'évidement (5) permet un jeu axial et tangentiel des crochets (4) par rapport au tube (1).

2. Tube de protection selon la revendication 1, caractérisé en ce que l'évidement (5) est réalisé sous la forme de gorge annulaire (5b;c) et/ou est placé derrière un bourrelet annulaire (11; 15), le bourrelet annulaire étant le cas échéant constitué par un élément torique (15) maintenu dans une deuxième gorge annulaire (14).

3. Tube de protection selon la revendication 1, caractérisé en ce qu'à chaque crochet (4) est associé un évidement (5a) propre, avec un jeu correspondant.

4. Tube de protection selon l'une des revendications précédentes, caractérisé en ce que les faces d'enveloppe (9, 7) extérieures et/ou intérieures des segments (2) sont biseautées de façon conique, dans le but d'augmenter le jeu pouvant être accordé dans la direction de la flexion, les crochets (4a) faisant de préférence saillie en forme d'ergots depuis les faces d'enveloppe intérieures (7a).

5. Tube de protection selon l'une des revendications 1 à 3, caractérisé en ce que les crochets (4) vont en s'effilant de façon conique vers l'extérieur sur leurs faces intérieures (7b), et en ce que de préférence le bord (8a) des segments tubulaires (2), sur lesquels est ménagé l'évidement (5), va en s'effilant de façon conique vers l'extérieur sur sa face d'enveloppe extérieure (9b), le cas échéant les crochets (4) étant réalisés sur des languettes (10) à caractéristiques élastiques, séparées.

6. Segment tubulaire (52) pour tubes de protection (1) composite avec des organes (3) destinés à l'encliquetage de plusieurs segments (2b) et avec une face d'enveloppe intérieure (7) sur une première extrémité de segment et une face d'enveloppe extérieure (9) sur l'autre extrémité de segment, ces faces d'enveloppe (7, 9) donnant, à l'état encliqueté de deux segments (2) voisins, des faces d'étanchéité (6) venant en contact les unes avec les autres, les organes (3) présentant, sur une face des segments, au moins trois crochets en forme d'ergots, élastiques, de préférence décalés d'un angle maximum de 120 degrés les uns par rapport aux autres, crochets pour la mise en prise desquels, sur le segment (2) chaque fois voisin, est prévu sur l'autre face au moins un évidement (5), caractérisé en ce que l'évidement (5) permet un jeu axial et tangentiel des crochets (4) d'un segment (2) voisin, par rapport au tube (1).

7. Segment selon la revendication 6, caractérisé en ce que les faces d'enveloppe intérieures et/ou extérieures (7, 9) sont biseautées de façon conique, les faces d'étanchéité étant réalisées chaque fois sur le diamètre minimal (face d'enveloppe conique intérieure (7)) et/ou maximal (face d'enveloppe conique extérieure (9)) des zones coniques.

8. Segment (2c) selon la revendication 6 ou 7, caractérisé en ce que les zones coniques sont bombées dans la zone des faces d'étanchéité, de préférence le diamètre extérieur (dₐ) à l'état non encliqueté, à l'emplacement bombé, étant supérieur au diamètre intérieur (dᵢ) de la face d'enveloppe intérieure (7).

9. Tube de protection et/ou segment tubulaire selon l'une des revendications précédentes, caractérisé en ce qu'il est fabriqué par moulage par injection en matière synthétique, de préférence en polyéthylène, en particulier en polyéthylène haute pression, le cas échéant cependant en polypropylène dur.

10. Tube de protection (1) et/ou segment tubulaire (2) selon l'une des revendications précédentes, caractérisé en ce qu'une autre gorge annulaire, destinée à recevoir un anneau d'étanchéité, est ménagée dans la zone de la face d'étanchéité (6).

11. Tube de protection (1) et/ou segment tubulaire (2) selon l'une des revendications précédentes, caractérisé en ce qu'un caoutchouc mousse ou analogue est utilisé pour l'anneau d'étanchéité et/ou pour l'élément torique.
